Europäisches Patentamt

European Patent Office

Office européen des brevets

(19)

(11) **EP 0 831 960 B1**

(12) **FASCICULE DE BREVET EUROPEEN**

(45) Date de publication et mention
de la délivrance du brevet:
**16.08.2001 Bulletin 2001/33**

(51) Int Cl.⁷: **B01D 39/04**, B01D 39/06,
C12H 1/04, C12H 1/06,
B01D 37/02, B01D 41/02

(21) Numéro de dépôt: **96911085.7**

(22) Date de dépôt: **10.05.1996**

(86) Numéro de dépôt international:
**PCT/IB96/00440**

(87) Numéro de publication internationale:
**WO 96/35497 (14.11.1996 Gazette 1996/50)**

(54) **PROCEDE DE REGENERATION D'ADJUVANTS DE FILTRATION ET PROCEDE DE FILTRATION UTILISANT UN TEL PROCEDE DE REGENERATION**

VERFAHREN ZUR REGENERIERUNG VON FILTERHILFSMITTEL UND FILTRATIONSVERFAHREN UNTER VERWENDUNG DESSELBEN

PROCESS FOR REGENERATING FILTRATION ADJUVANTS AND FILTRATION PROCESS USING SUCH A REGENERATION PROCESS

(84) Etats contractants désignés:
**AT BE CH DE DK ES FR GB GR IE IT LI LU NL PT SE**

(30) Priorité: **12.05.1995 FR 9505636**

(43) Date de publication de la demande:
**01.04.1998 Bulletin 1998/14**

(73) Titulaires:
• **INTERBREW SOCIETE ANONYME**
**B-1000 Bruxelles (BE)**
• **KRONTEC S.A.**
**1840 Luxembourg (LU)**

(72) Inventeurs:
• **VAN DEN EYNDE, Erik**
**B-3020 Winksele (BE)**
• **HERMIA, Jacques**
**B-1457 Walhain (BE)**
• **RAHIER, Georges**
**B-4000 Liège (BE)**

(74) Mandataire: **Keib, Gérard et al**
**NOVAMARK TECHNOLOGIES,**
**"Anciennement Brevets Rodhain & Porte",**
**IMMEUBLE VICTORIA MICHELET,**
**122, rue Edouard Vaillant**
**92593 Levallois Perret Cedex (FR)**

(56) Documents cités:
EP-A- 0 064 620     EP-A- 0 253 233
EP-A- 0 483 099     EP-A- 0 611 249
DE-A- 4 125 594     GB-A- 867 613
GB-A- 2 190 603     GB-A- 2 239 401
US-A- 3 220 928

• CHEMICAL ABSTRACTS, vol. 105, no. 17, 27 Octobre 1986 Columbus, Ohio, US; abstract no. 151542, J. KRALICEK ET AL.: "PULVERISED POLYAMIDE SORBENT BASED ON LIGNIN" page 567; XP002010676 & CS,A,227 470 (J.KARLICEK ET AL.) 15 Avril 1986
• CHEMICAL ABSTRACTS, vol. 73, no. 19, 9 Novembre 1970 Columbus, Ohio, US; abstract no. 98417, YU.L.MOSKOVICH: "LACTAMS" page 331; XP002010677 & SU,A,270 739 (YU.L.MOSKOVICH) 12 Mai 1970
• PATENT ABSTRACTS OF JAPAN vol. 15, no. 409 (C-0876), 18 Octobre 1991 & JP,A,03 169311 (NIPPON MIRIPORA KOGYO K.K.), 23 Juillet 1991, & DATABASE WPI Section Ch, Week 9135 Derwent Publications Ltd., London, GB; Class D05, AN 91-257714 & JP,A,03 169 311 (NIPPON MILLIPORE KO.), 23 Juillet 1991

**Description**

La présente invention se rapporte à un procédé de regénération in situ d'un adjuvant de filtration, utilisable dans la filtration de liquides, notamment de bière fin de garde. Elle se rapporte également à un nouveau procédé de filtration comprenant une telle régénération.

Les adjuvants de filtration constituent des substances utilisées dans les séparations solide - liquide avec formation d'un dépôt sur un tamis ou un support, soit seules, soit en mélange avec les substances à retenir et assurent par une action principalement mécanique, l'efficacité de la séparation.

Plusieurs types d'adjuvants de filtration peuvent être différenciés selon leurs constituants principaux.

Le type d'adjuvant le plus fréquemment utilisé en brasserie est le kieselguhr, composé principalement de diatomées calcinées.

D'autres types d'adjuvants comprennent notamment les perlites issues de roche volcanique, l'amidon, la cellulose ainsi que les matières synthétiques polymériques fibreuses.

Ces différents adjuvants forment, pendant la filtration, un milieu poreux captant les impuretés à éliminer et facilitent l'écoulement de la phase liquide.

Les adjuvants décrits dans ce qui précède peuvent être utilisés soit dans la technique dite en précouche, soit dans la technique dite d'alluvionnage.

Un secteur industriel dans lequel les adjuvants de filtration sont utilisés est le domaine de la brasserie.

En effet, la grande majorité des bières mises sur le marché doivent présenter une couleur brillante et être exemptes de micro-organismes. Pour le brasseur, ces exigences sont généralement respectées lorsque la bière possède une valeur de clarté E.B.C. (European Brewing Convention) inférieure à 0,5° EBC et une teneur en micro-organismes inférieure à 5 levures par litre.

Les valeurs de clarté E.B.C. et leur appréciation sont définies dans la publication : Analytica-E.B.C., 4ème Ed., 1987, Revue de la Brasserie et des Boissons Ed., Zurich.

Jusqu'à présent, le procédé le plus économique et le plus efficace pour atteindre ces valeurs consiste à utiliser un adjuvant de filtration dans le processus de fabrication de la bière.

En effet, la bière, après sa maturation dans des réservoirs de garde, doit être clarifiée et filtrée préalablement à son conditionnement pour éliminer un certain nombre d'impuretés, en particulier un trouble colloïdal ainsi que des levures. Après filtration, la bière présente alors une couleur brillante et une stabilité suffisante pour sa conservation.

La filtration avec adjuvant de la bière est généralement réalisée en utilisant l'une des deux techniques suivantes, à savoir la filtration sur masse ou la filtration en alluvionnage, cette dernière nécessitant la formation d'une précouche préalable.

La filtration en alluvionnage, de loin la plus couramment utilisée, consiste à déposer sur le milieu filtrant et préalablement à la filtration proprement dite, une première précouche de l'adjuvant de filtration d'une taille grossière pour protéger le support de filtration (par exemple des filtres à bougies ou des filtres-plans) d'une part et faciliter le débâtissage du filtre après filtration et le nettoyage du support de filtration d'autre part. Fréquemment, une seconde précouche de l'adjuvant d'une taille similaire à celle utilisée pour l'alluvionnage est déposée pour aider à l'obtention d'un filtrat clair dès le début du cycle de filtration.

En alluvionnage, l'adjuvant est mélangé à la bière avant la filtration pour former une suspension. Cette suspension forme lors de la filtration un gâteau mixte contenant à la fois des impuretés et l'adjuvant.

Lorsque le cycle de filtration est terminé, le gâteau d'adjuvant renfermant les impuretés retenues, notamment les levures, est éliminé par débâtissage sous la forme d'une suspension épaisse, communément appelée bourbe.

Dans le cas où la filtration est réalisée en utilisant des filtres à bougies, le débâtissage est généralement réalisé en envoyant à contre-sens dans le milieu filtrant une émulsion gaz-eau sous pression qui décolle le gâteau dudit milieu filtrant et le fait tomber dans le fond de la cuve de filtration où il est recueilli.

Dans le cas où la filtration est réalisée en utilisant des filtres à plateaux horizontaux, le gâteau est éliminé par la force centrifuge créée par la rotation des éléments filtrants.

Dans la filtration sur masse, l'adjuvant est déposé directement sur le support filtrant avant la filtration de la bière.

L'utilisation d'adjuvants de filtration, en particulier de kieselguhr, présente cependant un certain nombre d'inconvénients.

L'un des principaux inconvénients réside dans le fait que l'adjuvant ne peut être utilisé que pour un seul cycle de filtration.

Le brasseur est alors obligé de rejetter l'adjuvant, notamment le kieselguhr, et d'utiliser une nouvelle quantité d'adjuvant frais. On conçoit alors les problèmes que pose ce rejet pour l'environnement, en plus du coût supplémentaire du produit final lié à un approvisionnement régulier en adjuvant.

Des techniques de régénération de l'adjuvant, en particulier du kieselguhr, ont donc été envisagées, sans répondre cependant totalement aux besoins des industriels.

En effet, les techniques actuelles de régénération des adjuvants, en particulier du kieselguhr, ne permettent d'obtenir qu'une régénération partielle de l'adjuvant. Le brasseur est ainsi obligé d'ajouter, à chaque nouveau cycle de filtration, une certaine quantité d'adjuvant frais pour compenser la baisse d'efficacité de la filtration dûe notamment à l'accroissement de la quantité d'impûretés présentes, voire de rejeter, après plusieurs cycles de filtration, l'adjuvant régénéré partiellement, avec les problèmes déjà évoqués ci-dessus.

En outre, ces procédés nécessitent l'utilisation d'installations particuliéres et distinctes de celles des installations de filtration. Elles entraînent de ce fait des frais importants en investissement et en fonctionnement, notamment de frais de transport de l'adjuvant vers le site de régénération.

Le EP-A-0 611 249 décrit un procédé de régénération d'un adjuvant de filtration, en particulier du Kieselgur ou du verre, constitué par un traitement enzymatique dans de l'eau chaude. Ce traitement est effectué dans une installation de régénération distincte de l'installation de filtration. Il est précisé que les enzymes attaquent des impuretés organiques de poids moléculaire élevé et les transforment en une forme soluble dans l'eau à poids moléculaire inférieur. Des traitements complémentaires de nettoyage sont possibles, notamment par utilisation d'une solution de soude diluée, ou par utilisation d'un oxydant.

Il est possible de soumettre la boue de Kieselgur à un traitement par ultrasons, un tel traitement étant connu pour améliorer l'action des procédés de séparation.

Ce document précise que ce procédé permet d'éliminer jusqu'à 80% des impuretés organiques adhérentes, essentiellement des levures et des protéines, de sorte que l'on peut obtenir une perte au feu inférieure à 2%. Les impuretés restantes sont présentées comme n'étant gênantes, ni sur le plan de la filtration, ni sur le plan de l'hygiène. Cependant, un résidu de 2% d'impuretés organiques a un effet cumulatif sur le plan de la filtration et a nécessairement une influence négative sur le plan de l'hygiène.

Par ailleurs, le EP-A-0 253 233 décrit un procédé de régénération de Kieselgur au moyen d'une solution de soude.

Le Kieselgur est traité dans un récipient chauffant extérieur à l'installation de filtration utilisant cet adjuvant. L'adjuvant est maintenu en présence de la solution de soude pendant une durée prédéterminée, et est soumis à une agitation avec ménagement : cette dernière précision fait partie de la revendication 1 et est donc considérée comme une caractéristique essentielle du procédé ainsi décrit.

Ce document précise qu'après un traitement d'environ 1 heure, pratiquement toutes les substances contenant de l'albumine ainsi que les levures sont presque complètement éliminées. Le Kielselgur comprend encore environ 1 à 2% de substances organiques, constituées essentiellement de polysaccharides. Il est précisé que ces polysaccharides, qui peuvent être éliminés en cas de besoin par une hydrolyse acide, ne gênent pas la filtration de sorte qu'ils n'est absolument pas nécessaire de les éliminer.

Le Kieselgur ainsi traité peut être réutilisé avec addition d'environ 10 à 20% de Kieselgur neuf.

Cette première antériorité est citée comme art antérieur dans l'introduction du EP-A-0 611 249, qui précise que ce procédé permet seulement d'obtenir un taux de recyclage d'environ 70% et qu'il reste de 2 à 5% d'impuretés organiques dans le Kielselgur régénéré, ce pourcentage étant déterminé par perte au feu.

Compte tenu des investissements coûteux nécessaires pour réaliser l'installation de traitement, ce procédé est présenté comme économiquement et techniquement non rentable et non utilisable.

Enfin, le US-A-3 220 928 décrit un procédé pour nettoyer les toiles filtrantes des filtres-presses employés en brasserie. Selon ce procédé, on démonte le filtre-presse, on retire sur chaque élément de filtre le gâteau de matière accumulé sur la toile filtrante, puis on remonte et on referme le filtre-presse avec les mêmes toiles filtrantes, on fait ensuite passer dans le filtre-presse une solution enzymatique de nettoyage ayant une activité amylolytique et protéolytique, enfin on rince pour éliminer la solution de nettoyage.

Ce document n'enseigne pas un procédé permettant de régénérer in situ un adjuvant de filtration chargé d'impuretés organiques constituées essentiellement de levures.

Des recherches ont alors été menées pour développer un adjuvant régénérable permettant de résoudre les problèmes décrits dans ce qui précède. Un adjuvant de filtration de ce type a notamment été proposé, consistant en des billes sphériques de matériau synthétique, pouvant être régénéré dans les installations de filtration existantes. Cet adjuvant ne permet toutefois de résoudre qu'en partie les inconvénients évoqués ci-dessus.

En effet, la forme quasiment sphérique des particules d'adjuvant nécessite l'utilisation de particules d'une taille relativement importante, notamment supérieure à 100 µm, pour obtenir une perméabilité acceptable du gâteau et conduit à un milieu filtrant d'une épaisseur importante. De plus l'efficacité de la filtration est généralement insuffisante.

En outre, le degré de régénération obtenu par les techniques conventionnelles s'avère encore insatisfaisant.

L'invention a pour principal but de remédier en grande partie à ces inconvénients, en proposant un procédé de régénération à un niveau satisfaisant d'adjuvants sans utiliser d'installations spéciales.

L'invention a également pour but de proposer un nouveau procédé de filtration comprenant une telle régénération, qui permette d'obtenir un liquide répondant aux exigences actuelles de qualité.

Les adjuvants de filtration régénérables utilisables pour la filtration de liquides, notamment de bière fin de garde comprennent des grains incompressibles polymériques synthétiques ou naturels ou des grains incompressibles naturels possèdent un coefficient de sphéricité variant entre environ 0,6 et environ 0,9.

Le coefficient de sphéricité est défini selon la méthode décrite dans la publication "Particle size measurement", T. Allen, p. 76-77, Chapman and Hall Ed., London 1974.

De préférence, les adjuvants comprennent des grains d'une taille moyenne variant entre environ 20 μm et environ 70 μm, formant un gâteau de filtration d'une porosité comprise entre environ 0,4 et environ 0,8 et d'une masse spécifique variant entre environ 1000 et environ 1500 kg/m$^3$.

La porosité du gâteau de filtration est déterminée par la méthode décrite par R. Leenaerts dans : La Filtration Industrielle des Liquides, Tome 1, Chapître 2, Société Belge de Filtration Ed., 1974.

De préférence, les adjuvants comprennent des grains d'une taille moyenne variant entre environ 20 μm avec un écart-type d'environ 10 μm et environ 70 μm avec un écart-type d'environ 25 μm.

De préférence, les adjuvants possèdent une taille moyenne de grains d'environ 35 μm avec un écart-type d'environ 15 μm et une masse spécifique d'environ 1200 kg / m$^3$.

Les adjuvants forment l'ossature d'un milieu poreux qui piège les impuretés lorsqu'elles se déposent à sa surface sans pour autant se colmater instantanément. Pour ce faire, il doit y avoir pontage entre les particules d'adjuvant afin que les impuretés se logent dans les anfractuosités situées entre les particules d'adjuvant sans subir de déformation ni participer à la structure du milieu granulaire.

L'obtention d'une porosité adéquate du milieu poreux repose sur l'emploi d'un adjuvant dont la forme favorise la formation de surface de contact entre les particules et dont la distribution granulométrique est suffisamment serrée pour ne pas donner lieu à une distribution de la taille des pores trop importante.

Les adjuvants possèdent une forme de grains, intermédiaire entre la forme fibreuse et compressible des adjuvants de type kieselguhr et la forme pratiquement sphérique des adjuvants synthétiques en billes de l'art antérieur qui engendrent des gâteaux de faible porosité.

Selon une forme de réalisation préférée, les adjuvants comprennent des grains incompressibles polymériques synthétiques ou naturels ou des grains incompressibles naturels obtenus notamment à partir de polyamide, de polychlorure de vinyle, de produits fluorés tels que le TEFLON® , de polypropylène, de polystyrène, de polyéthylène, de certains dérivés de silice, par exemple de ryolites ou de verre, ainsi que leurs mélanges.

A titre illustratif et non limitatif de polyamides utilisables, on citera notamment le polycaprolactame, l'adipamide de poly(hexaméthylène), le nonanediamide de poly(hexaméthylène), le sébacamide de poly(hexaméthylène), le dodécanodiamide de poly(hexaméthylène), le polyundécanolactame, le polylauryllactame et/ou leurs mélanges.

Les polyamides ci-dessus appartiennent à la famille des produits commercialisés sous la marque NYLON® .

Selon une forme particulièrement préférée, le polyamide constituant le constituant principal des adjuvants de la présente invention est le polyundécanolactame.

De préférence, les adjuvants sont de qualité alimentaire et résistent aux solutions acides et alcalines diluées. Ils présentent de plus une résistance suffisante à l'abrasion et aux agents de régénération, ainsi qu'à des températures de l'ordre de 100°C. Ils sont de plus indéformables sous l'effet de la pression de filtration.

L'invention se rapporte à un nouveau procédé de régénération in situ d'adjuvants de filtration, nouveau en lui-même et pouvant être utilisé notamment pour la régénération des adjuvants de l'invention.

Le procédé de régénération selon l'invention est défini dans la revendication 1.

Le procédé de régénération in situ selon l'invention est particulièrement bien adapté à la régénération des adjuvants mentionnés antérieurement.

L'invention a également pour objet un nouveau procédé de filtration de liquides tel que défini dans la revendication 12.

Le procédé de filtration d'un liquide, notamment de bière fin de garde comprenant des étapes de désaération, de dépôt d'une précouche sur un support de filtration, de recirculation, se caractérise en ce que l'étape de filtration est réalisée avec un adjuvant de filtration selon la présente invention.

De préférence, les proportions entre l'adjuvant et le liquide à filtrer varient entre environ 25 g d'adjuvant / hl de liquide et environ 250 g d'adjuvant / hl de liquide.

Selon l'invention, le procédé de filtration suit les mêmes étapes qu'une filtration avec kieselguhr jusqu'à la fin de l'étape des nachlaufs. On désigne généralement par nachlauf l'étape consistant, après le cycle de filtration, à évacuer la bière hors du milieu filtrant en effectuant un lavage à l'eau.

Ces étapes consistent notamment en un dégazage ou une désaération du filtre comprenant le milieu filtrant et l'appareillage de filtration. Une précouche est déposée sur le support filtrant selon la technique conventionnelle, à savoir à un débit proche de 25 hl / hm$^2$.

L'eau remplissant le filtre est ensuite évacuée en effectuant un passage de la bière additionnée d'adjuvant dans l'étape appelée vorlauf. Lorsque la composition du mélange eau-bière est satisfaisante, l'étape de filtration débute et le filtrat obtenu est ensuite envoyé vers l'unité d'embouteillage.

Selon une forme de réalisation préférée de l'invention, le procédé comporte de plus une étape de stabilisation.

Cette étape peut être effectuée pendant ou après l'étape de filtration proprement dite, en utilisant des additifs conventionnellement employés, tels que notamment les gels de silice, les tanins galliques, etc. Généralement, lorsque la stabilisation est effectuée après la filtration, des enzymes protéolytiques et du polyvinylpyrrolidone (PVPP), de préférence régénérables, sont utilisés.

Avantageusement, la stabilisation est effectuée de façon concomitante à la filtration.

Avantageusement, la composition enzymatique comprend des protéases ainsi que des agents capables de lyser les levures.

On citera à titre non limitatif de compositions enzymatiques utilisables dans le cadre de la présente invention, le produit disponible commercialement sous la dénomination SP299 auprès de la société Novo, Danemark et le produit YLE® disponible commercialement auprès de la société Amano, Japon.

Des agents de catalyse enzymatique peuvent éventuellement être ajoutés à la composition enzymatique dans le but d'améliorer encore son efficacité.

On remarquera au sujet du traitement enzymatique de l'adjuvant que ce traitement n'est pas effectué nécessairement à la fin de chaque cycle de filtration, mais seulement lorsque la montée en pression dans le filtre durant le cycle de filtration devient trop importante.

De préférence, le traitement enzymatique est réalisé lorsque la montée en pression par heure devient trop importante et significativement plus élevée qu'avec un adjuvant de filtration non encrassé. On entend par adjuvant non encrassé un adjuvant frais ou totalement régénéré.

Par exemple, le traitement enzymatique est réalisé lorsque la montée en pression dans la cuve de filtration atteint environ 80 % de la pression maximale autorisée par la structure mécanique du filtre, soit dans une période de temps significativement plus courte qu'avec un adjuvant non encrassé, soit avec un volume de bière filtrée significativement plus réduit qu'avec un adjuvant non encrassé.

Lorsque le procédé de filtration selon l'invention comprend une étape de stabilisation, la régénération de l'adjuvant de filtration provoque également la régénération de l'agent stabilisant, par exemple du PVPP.

Le procédé de filtration selon la présente invention permet donc d'obtenir une bière répondant aux exigences en termes de clarté et de stabilité et permet également de régénérer l'adjuvant de filtration directement dans la cuve de filtration sans avoir à le transporter et sans avoir à modifier les installations existantes.

Le procédé de filtration selon l'invention peut être mis en oeuvre avec différents supports de filtration.

Selon une première forme de réalisation, la filtration est réalisée sur des filtres à bougies, déjà largement utilisés en brasserie. Les filtres à bougies utilisables dans le cadre de la mise en oeuvre du procédé selon l'invention comprennent un fil enroulé en spires autour d'un support vertical, la distance entre deux spires variant entre environ 20 μm et environ 70 μm, de préférence entre environ 20 μm et environ 45 μm.

Avantageusement, le fil est réalisé à partir de matière de qualité alimentaire, résistante aux réactifs utilisés dans le procédé de filtration. Selon une forme particulièrement avantageuse, le fil enroulé en spires a une forme trapézoïdale, le grand côté du trapèze étant dirigé vers l'extérieur du filtre à bougies, du côté de la matière à filtrer. De cette façon, les particules contenues dans la bière et de taille inférieure à la distance entre les spires, passent au travers du filtre, sans risquer de se colmater dans l'épaisseur du fil et d'obstruer ainsi le filtre, les dimensions du passage dans l'épaisseur du fil étant plus grandes que la distance de passage entre deux spires.

A titre d'exemples non limitatifs de filtres à bougies utilisables, on citera les produits de type "Trislot", commercialisés par la société Bekaert, Belgique.

Selon une autre forme de réalisation, le support de filtration comprend des tamis, de préférence horizontaux, encore appelés filtres-plans d'une grandeur de maille variant entre environ 10 μm et environ 70 μm, de préférence entre environ 10 μm et environ 20 μm.

De la même façon que précédemment, les filtres-plans sont réalisés en un matériau de qualité alimentaire, résistent aux solvants et réactifs utilisés dans la filtration.

A titre d'exemple non limitatif de tamis utilisable, on citera le tamis de type M15 commercialisé par la société South West Screen, Belgique.

Des supports de filtration utilisables dans le cadre de l'invention consistent en des bougies comprenant un fil réalisé à partir de matière de qualité alimentaire résistante aux réactifs utilisés dans le procédé de filtration, enroulé en spires autour d'un support vertical, la distance entre deux spires variant entre environ 20 μm et environ 70 μm, de préférence entre environ 20 μm et environ 45 μm et possèdent la forme trapézoïdale telle que définie dans ce qui précède.

Selon une autre forme de réalisation, les supports de filtration consistent en des tamis, de préférence horizontaux, réalisés à partir de matière de qualité alimentaire résistante aux réactifs utilisés dans le procédé de filtration, d'une grandeur de maille variant entre environ 10 μm et environ 70 μm, de préférence entre environ 10 μm et environ 20 μm.

Des avantages et caractéristiques supplémentaires de l'invention apparaîtront encore à la lumière de la description plus détaillée qui suit de formes de réalisation de l'invention, données à titre purement illustratif et non limitatif.

<u>Exemple.</u>

1) <u>Installation.</u>

L'adjuvant utilisé est du Nylon 11, disponible commercialement sous la dénomination RILSAN® auprès de la société Atochem, France.

Le filtre à bougies utilisé est constitué d'une zone d'alimentation conique, d'une virole cylindrique d'un diamètre de 215 mm et d'une hauteur de 2,05 m. Trois bougies de 32 mm de diamètre dont l'intérieur communique avec la zone de récolte du filtrat sont suspendues dans la virole. La hauteur des bougies est de 1,5 m et la distance entre leurs axes est de 86 mm, pour déposer un gâteau d'une épaisseur de 25 mm au maximum tout en préservant une distance de 15 mm entre la surface du gâteau et la paroi de la virole. Le volume total du filtre est de 78 1 et la surface de filtration de 0,45 m$^2$. Le seuil de coupure des bougies est de 30 $\mu$m et le profil du fil trapézoïdal.

2) <u>Filtration.</u>

2.1) <u>Dépôt de la précouche.</u>

L'installation est en premier lieu stérilisée et désaérée avant le dépôt de la précouche qui est mené à un débit de 20 à 30 hl/hm$^2$, et de la même manière que sur un filtre industriel. L'injection de la suspension de moût contenant le RILSAN® est réalisée pendant 7 minutes en moyenne et une recirculation de 15 minutes permet de déposer la totalité de l'adjuvant. Si la stabilisation de la bière est effectuée en même temps que la filtration, la précouche est constituée d'un mélange de RILSAN® et de PVPP disponible commercialement auprès de la société Gaf, U.S.A.

Dans ce cas, les proportions entre ces deux constituants (PVPP / RILSAN® ) sont les mêmes que pour l'alluvionnage, à savoir 2/1 à 1/4 en poids, pour qu'après débâtissage, la composition de la masse filtrante régénérée ne soit pas modifiée. Indépendamment de l'addition de PVPP, la concentration en précouche atteint de 1,5 à 2 kg/m$^2$, valeur supérieure aux teneurs recommandées conventionnellement, mais qui représente une épaisseur de gâteau sensiblement voisine de celle obtenue pour des adjuvants traditionnels.

2.2) <u>Filtration.</u>

Le choix du débit de filtration est conditionné par la montée en pression ainsi que par le temps de contact nécessaire pour obtenir un effet stabilisant suffisant. Pour ce faire, les installations de stabilisation au PVPP fonctionnent à un débit voisin de 10 hl/hm$^2$.

Un premier essai réalisé sur un filtre-plan, avec une bière de type Pils contenant un million de levures / ml additionnée d'un mélange de 25 à 200 g / hl de RILSAN® et de 50 g / hl de PVPP a donné lieu à une montée en pression variant entre 15000 et 30000 N.m$^{-2}$ / heure selon la composition du mélange, le PVPP représentant entre 20 % et 67 % en poids de l'alluvionnage total. Pour des teneurs identiques en kieselguhr, une montée en pression supérieure à 80000 N.m $^2$/ heure est constatée dans le mêmes conditions.

Un deuxième essai est réalisé avec une bière de type Pils obtenue par darauflassen et dont la charge après centrifugation atteint 300 000 levures / ml. Elle conduit, pour une concentration totale en alluvionnage de 150 g/hl (100 g/hl d'adjuvant et 50 g/hl de PVPP) à une différence de pression entre l'entrée et la sortie du filtre de 50000 N.m$^{-2}$ après 20 heures de filtration et ce pour un débit de 10 hl/hm$^2$.

Toujours à 10 hl/m$^2$ et pour la même teneur en alluvionnage, une bière dont la charge est de 5 millions de levures par ml conduit à une montée en pression de 35000 N.m$^{-2}$/heure.

2.3) <u>Qualité de la bière.</u>

La clarté de la bière après filtration répond aux normes en la matière. Elle est largement inférieure à 0,7° EBC, valeur recommandée et est, lors d'essais menés à basse température, inférieure à 0,5° EBC. Des valeurs de 0,3° EBC ont été régulièrement mesurées.

La stérilité de la filtration est vérifiée par prélèvement d'échantillons de 0,5 1 qui sont filtrés sur une membrane en nitrate de cellulose de 0,45 $\mu$m de seuil de coupure. La membrane est ensemencée à l'aide d'un milieu de culture de type malt extract agar et incubée à 30°C pendant 5 jours. Un seuil de 0 levure / 0,5 1 est atteint à la fin du vorlauf.

En comparant les caractéristiques de la bière avant et après filtration et indépendamment de la concentration en adjuvant, aucun phénomène d'adsorption par l'adjuvant de filtration selon l'invention n'est détectable, en particulier en ce qui concerne la couleur et la teneur en isohumulones. De plus, l'ajout de 50 g / hl de PVPP à l'alluvionnage conduit à une réduction de 50 % en concentration des polyphénols totaux même en présence de levures.

Deux bières de référence, l'une étant filtrée avec le procédé selon l'invention, l'autre avec un procédé conventionnel ont été soumises à une dégustation par un groupe de huit experts. Aucune différence significative de goût n'a été détectée.

Les résultats obtenus sont résumés dans le tableau I figurant en annexe de la présente demande de brevet.

2.4) Régénération.

Un lavage de la masse filtrante réalisé dans l'outil de filtration et sans débâtissage avec une solution de soude à 2 % à une température de 80°C a entraîné une réduction de la taille des levures de 40 % après deux heures de traitement.

Ces déchets demeurent trop gros pour pouvoir être éliminés du gâteau par simple lavage et provoquent en s'accumulant un accroissement de la montée en pression durant la filtration. Ainsi, pour une bière, contenant initialement un million de levures / ml, filtrée à un débit de 10 hl / hm$^2$ en présence de 50 g / hl de RILSAN® et de 50 g / hl de PVPP, la montée en pression varie d'un facteur trois après cinq cycles.

Un traitement enzymatique permet de remédier à cette situation, en réduisant la taille des levures de 25 % à 35 % après traitement pendant deux à trois heures.

Le traitement enzymatique est réalisé en lavant la masse filtrante par une solution d'enzymes disponible commercialement sous la dénomination YLE® auprès de la société Amano. Le traitement enzymatique est effectué à un pH de 5-6 et à une température de 50°C après l'attaque à la soude, ce qui implique de ramener pH et température aux valeurs ci-dessus.

Les déchets de cette lyse sont ensuite éliminés par un second lavage à la soude. La périodicité du traitement enzymatique dépend de la charge initiale de la bière avant filtration, du type de filtre utilisé et de la longueur de cycle souhaitée.

Exemple comparatif.

Les volumes de bière filtrée par le procédé de l'invention et par un procédé de filtration conventionnel ont été comparés par extrapolation, sur une unité de filtration constituée d'un filtre unique à bougies. Dans cet essai comparatif, la surface de filtration est de 80 m$^2$ et permet de déposer un gâteau d'un volume de 3 m$^3$ avec une distance entre les gâteaux déposés sur les bougies de 5 mm en fin de filtration.

La charge de la bière avant filtration est supposée être de un million de levures / ml et le débit de filtration est de 10 hl / hm$^2$. Le volume filtré par cycle est calculé de façon à ce que le volume laissé libre pour les bourbes soit totalement rempli en fin de cycle et que la différence de pression finale ne dépasse pas 400000 N.m$^{-2}$, valeur permettant une contre-pression importante.

Pour une teneur en alluvionnage (a) donnée, le volume filtré par cycle (Vf) est calculé à partir du volume libre pour le gâteau (3 m$^3$) et de la concentration en adjuvant de la précouche (a$_p$) selon la réaction :

$$Vf = \frac{3\rho_{GS} - 80a_p}{a}$$

dans laquelle $\rho_{GS}$ représente la masse spécifique apparente du gâteau.

La pression finale est alors calculée selon la loi de fonctionnement relative à une filtration cylindrique menée à débit constant, telle décrite par J. Hermia et al., dans Filtration and Separation, 1994, 31, 721-725.

Les résultats sont illustrés dans le tableau II figurant en annexe de la présente demande de brevet.

Dans le tableau II, a$_p$ désigne le poids d'adjuvant par mètre carré de surface; a désigne le poids d'adjuvant par hl de bière; P$_{GS}$ désigne la masse apparente spécifique du gâteau; $\Delta$ P désigne la perte de charge du gâteau; t$_f$ le temps de filtration et Vf le volume filtré.

Outre l'avantage de pouvoir régénérer in situ la masse filtrante, le nouveau procédé selon l'invention permet de filtrer des volumes généralement plus importants de bière que les procédés conventionnels.

Ainsi, bien que l'invention ait été décrite dans ce qui précède plus particulièrement en utilisant la technique de filtration en alluvionnage, les nouveaux adjuvants et supports de l'invention et les procédés de filtration et de régénération de l'invention peuvent être utilisés avec la même efficacité dans la technique de filtration en précouche.

Annexe

Tableau I.

| Caractéristiques de la bière filtrée. | | | | |
|---|---|---|---|---|
| | Essai avec RILSAN® seul | | Essai avec mélange RILSAN® /PVPP | |
| | Bière non filtrée | Bière filtrée | Bière non filtrée | Bière filtrée |
| Couleur (EBC) | 6,2 | 6,1 | 5,4 | 5,0 |
| Isohumulones (EBU) | 23,1 | 22,8 | 23,3 | 22,9 |
| Polyphénols (mg/l) | 196 | 184 | 200 | 90 |

Tableau II.

| Volumes filtrés selon le type d'alluvionnage. | | | |
|---|---|---|---|
| | Kieselguhr | RILSAN® seul | RILSAN®/PVPP |
| $a_p$ (kg/m$^2$) | 1 | 2 | 2 |
| a (g / hl) | 100 | 80 | 50 + 50 |
| $\rho_{GS}$ (kg/m$^3$) | 325 | 480 | 350 |
| $\Delta P$(N.m$^{-2}$) | 360000 | 40000 | 90000 |
| $t_f$(h) | 12,0 | 14,9 | 11,1 |
| Vf(hl) | 8950 | 14870 | 8900 |

## Revendications

1. Procédé de régénération d'un adjuvant de filtration constitué de grains naturels ou polymériques synthétiques ou naturels indéformables sous l'effet de la pression de filtration, ayant un coefficient de sphéricité compris entre 0,6 environ et 1, cet adjuvant étant de préférence formé de grains ayant un coefficient de sphéricité compris entre 0,6 environ et 0,9 environ, d'une taille moyenne comprise entre 20 µm environ et 70 µm environ, adaptés à former un gâteau de filtration ayant une porosité comprise entre 0,4 environ et 0,8 environ et une masse spécifique comprise entre 1000 kg/m$^3$ environ et 1500 kg/m$^3$ environ et de préférence égale à 1200 kg/m$^3$ environ, cet adjuvant étant chargé d'impuretés organiques constituées essentiellement de levures après filtration d'un liquide chargé de ces impuretés, par exemple pour la préparation d'une boisson telle que de la bière, et étant déposé sur le support filtrant d'une installation de filtration, ce procédé comprenant une étape consistant à laver la masse filtrante avec une composition enzymatique appropriée, cette étape étant suivie d'un lavage avec une solution de soude, caractérisé en ce qu'il comporte les étapes suivantes :

   a) on effectue un lavage préalable de la masse filtrante à régénérer, in situ dans l'installation de filtration, au moyen d'une solution de soude ayant une concentration comprise entre 2% environ et 5% environ, à une température d'au moins 80°C environ pendant une durée comprise entre 60 minutes environ et 120 minutes environ;
   b) sur la masse filtrante ayant subi l'étape a), on effectue ensuite in situ, dans l'installation de filtration, le lavage précité avec une composition enzymatique appropriée, ce lavage étant effectué à une température comprise entre 40°C environ et 60°C environ, pendant une durée comprise entre 100 minutes environ et 200 minutes environ.
   c) puis, sur la masse filtrante ayant subi l'étape b), on effectue un second lavage avec une solution de soude pour éliminer les déchets produits lors de ladite étape b).

2. Procédé de régénération selon la revendication 1, caractérisé en ce que la composition enzymatique comprend notamment des protéases, des agents capables de lyser les levures, éventuellement des agents de catalyse enzymatique, et comprend par exemple la composition SP 299® de NOVO ou la composition YLE® de AMANO.

3. Procédé de régénération selon la revendication 1 ou 2, caractérisé en ce que le traitement enzymatique est réalisé quand la montée en pression par heure devient trop importante et significativement plus élevée qu'avec un adjuvant de filtration non encrassé.

4. Procédé de régénération selon la revendication 3, caractérisé en ce que le traitement enzymatique est réalisé quand la montée en pression dans la cuve de filtration atteint environ 80% de la pression maximale autorisée par la construction mécanique du filtre.

5. Procédé de régénération selon l'une des revendications 1 à 4, caractérisé en ce qu'il comprend, entre les étapes a) et b), une étape consistant à amener l'adjuvant à une température comprise entre 40°C et 60°C et à un pH compris entre 5 et 6.

6. Procédé de régénération selon l'une des revendications 1 à 5, caractérisé en ce que l'adjuvant comprend des grains d'une taille moyenne comprise entre environ 20 $\mu$m, avec un écart-type d'environ 10 $\mu$m, et environ 70 $\mu$m, avec un écart-ype d'environ 25 $\mu$m.

7. Procédé de régénération selon la revendication 6, caractérisé en ce que l'adjuvant comprend des grains d'une taille moyenne d'environ 35 $\mu$m avec un écart-type d'environ 15 $\mu$m et d'une masse spécifique d'environ 1200 kg/m$^3$.

8. Procédé de régénération selon l'une quelconque des revendications 4 à 7, caractérisé en ce que les grains polymériques synthétiques sont des grains obtenus notamment à partir de polyamide, de polychlorure de vinyle, de produits fluorés, de polypropylène, de polystyrène, de polyéthylène, de certains dérivés de silice, par exemple de ryolites, de verre, ainsi que leurs mélanges.

9. Procédé de régénération selon la revendication 8, caractérisé en ce que les grains de polyamide consistent de préférence en des grains de polycaprolactame, d'adipamide de poly(hexaméthylène), de nonanediamide de poly(hexaméthylène), de sébacamide de poly(hexaméthylène), de dodécanodiamide de poly(hexaméthylène), de polyundécanolactame, de polylauryllactame et/ou leurs mélanges.

10. Procédé de régénération selon l'une des revendications 1 à 9, caractérisé en ce qu'il est appliqué pour régénérer des grains d'adjuvant de filtration comprenant également des billes sensiblement sphériques ou constitués de billes sensiblement sphériques.

11. Procédé de régénération selon l'une des revendications précédentes, caractérisé en ce que l'adjuvant de filtration est mélangé avec un agent de stabilisation de la boisson à filtrer, par exemple du PVPP.

12. Procédé de filtration par la technique d'alluvionnage, d'un liquide chargé d'impuretés organiques constituées essentiellement de levures, par exemple pour la préparation d'une boisson telle que de la bière, avec utilisation d'un adjuvant de filtration constitué de grains naturels ou polymériques synthétiques ou naturels, indéformables sous l'effet de la pression de filtration, ayant un coefficient de sphéricité variant entre 0,6 environ et 0,9 environ, d'une taille moyenne comprise entre 20 $\mu$m environ et 70 $\mu$m environ, adaptés à former un gâteau de filtration ayant une porosité comprise entre 0,4 environ et 0,8 environ et une masse spécifique comprise entre 1000 kg/m$^3$ environ et 1500 kg/m$^3$ environ et de préférence égale à 1200 kg/m$^3$ environ, cet adjuvant étant mélangé audit liquide à filtrer chargé de ces impuretés et se déposant sur le support filtrant d'une installation de filtration en se chargeant desdites impuretés au cours d'une opération de filtration dudit liquide, caractérisé en ce qu'il comporte, après une ou plusieurs opérations de filtration, une étape de régénération in situ par mise en oeuvre du procédé selon l'une des revendications 1 à 11.

## Claims

1. Process for the regeneration of a filtration adjuvant consisting of natural or synthetic polymeric or natural granules which are nondeformable under the effect of the filtration pressure, having a sphericity coefficient of between 0.6 approximately and 1, this adjuvant being preferably formed of granules having a sphericity coefficient of between 0.6 approximately and 0.9 approximately, having a mean size of between 20 $\mu$m approximately and 70 $\mu$m approximately, suitable for forming a filtration cake having a porosity of between 0.4 approximately and 0,8 approximately and a density of between 1000 kg/m$^3$ approximately and 1500 kg/m$^3$ approximately and preferably equal

to 1200 kg/m$^3$ approximately, this adjuvant being loaded with organic impurities essentially consisting of yeast after filtration of a liquid loaded with these impurities, for example for the preparation of a drink such as beer, and being deposited on the filtering support of a filtration installation, this process comprising a step consisting in washing the filtering mass with an appropriate enzymatic composition, this step being followed by washing with a sodium hydroxide solution,
characterized in that it comprises the following steps:

a) preliminary washing of the filtering mass to be regenerated is carried out in situ in the filtration installation by means of a sodium hydroxide solution having a concentration of between 2% approximately and 5% approximately, at a temperature of at least 80°C approximately for a period, of between 60 minutes approximately and 120 minutes approximately;
b) on the filtering mass which has been subjected to step a), the abovementioned washing is then carried out in situ, in the filtration installation, with an appropriate enzymatic composition, this washing being carried out at a temperature of between 40°C approximately and 60°C approximately, for a period of between 100 minutes approximately and 200 minutes approximately;
c) and then, on the filtering mass which has been subjected to step b), a second washing is carried out with a sodium hydroxide solution in order to remove the waste produced during the said step b).

2.  Process of regeneration according to Claim 1, characterized in that the enzymatic composition comprises in particular proteases, agents capable of lysing yeasts, optionally agents for enzymatic catalysis, and comprises for example the composition SP 299® from NOVO or the composition YLE® from AMANO.

3.  Process of regeneration according to Claim 1 or 2, characterized in that the enzymatic treatment is carried out when the increase in pressure per hour becomes too high and significantly higher than with a nonclogged filtration adjuvant.

4.  Process of regeneration according to Claim 3, characterized in that the enzymatic treatment is carried out when the increase in pressure in the filtration vessel reaches approximately 80% of the maximum pressure allowed by the mechanical construction of the filter.

5.  Process of regeneration according to one of Claims 1 to 4, characterized in that it comprises between steps a) and b), a step consisting in supplying the adjuvant at a temperature of between 40°C and 60°C and at a pH of between 5 and 6.

6.  Process of regeneration according to one of Claims 1 to 5, characterized in that the adjuvant comprises granules having a mean size of between approximately 20 µm with a standard deviation of approximately 10 µm and approximately 70 µm, with a standard deviation of approximately 25 µm.

7.  Process of regeneration according to Claim 6, characterized in that the adjuvant comprises granules having a mean size of approximately 35 µm with a standard deviation of approximately 15 µm and a density of about 1200 kg/m$^3$.

8.  Process of regeneration according to any one of Claims 4 to 7, characterized in that the synthetic polymeric granules are granules obtained in particular from polyamide, polyvinyl chloride, fluorinated products, polypropylene, polystyrene, polyethylene, some derivatives of silica, for example ryolites, glass, as well as mixtures thereof.

9.  Process of regeneration according to Claim 8, characterized in that the polyamide granules preferably consist of granules of polycaprolactam, poly(hexamethylene) adipamide, poly(hexamethylene) nonanediamide, poly(hexamethylene) sebacamide, poly (hexamethylene) dodecanodiamide, polyundecanolactam, polylauryllactam and/or mixtures thereof.

10. Process of regeneration according to one of Claims 1 to 9, characterized in that it is applied so as to regenerate filtration adjuvant granules also comprising substantially spherical beads or consisting of substantially spherical beads.

11. Process of reganeration according to one of the preceding claims, characterized in that the filtration adjuvant is mixed with an agent for stabilizing the drink to be filtered, for example PVPP.

**12.** Process for filtering, by the alluviation technique, a liquid loaded with organic impurities essentially consisting of yeasts, for example for the preparation of a drink such as beer, with the use of a filtration adjuvant consisting of natural or synthetic polymeric or natural granules, which are nondeformable under the effect of the filtration pressure, having a sphericity coefficient varying between 0.6 approximatoly and 0.9 approximately having a mean size of between 20 µm approximately and 70 µm approximately, suitable for forming a filtration cake having a porosity of between 0.4 approximately and 0.8 approximately and a density of between 1000 kg/m$^3$ approximately and 1500 kg/m$^3$ approximately and preferably equal to 1200 kg/m$^3$ approximately, this adjuvant being mixed with the said liquid to be filtered loaded with these impurities and being deposited on the filtering support of a filtration installation while becoming loaded with the said impurities during an operation for filtering the said liquid, characterized in that it comprises, after one or more filtration operations, a regeneration step in situ using the process according to one of Claims 1 to 11.

**Patentansprüche**

**1.** Verfahren zur Regenerierung eines Filterhilfsmittels, das aus natürlichen oder synthetischen polymerischen oder natürlichen, unter der Wirkung des Filtrationsdruckes nicht verformbaren Körnern mit einem Rundungskoeffizienten zwischen ungefähr 0,6 und 1 besteht, wobei dieses Filterhilfsmittel vorzugsweise aus Körnern mit einem Rundungskoeffizienten zwischen ungefähr 0,6 und ungefähr 0,9 und mit einer mittleren Größe zwischen ungefähr 20 µm und ungefähr 70 um besteht, welche dafür eingerichtet sind, einen Filterkuchen mit einer Porosität zwischen ungefähr 0,4 und ungefähr 0,8 und einem spezifischen Gewicht zwischen ungefähr 1000 kg/m$^3$ und 1500 kg/m$^3$ und vorzugsweise ungefähr gleich 1200 kg/m$^3$ zu bilden, wobei dieses Filterhilfsmittel mit organisches Verunreinigungen, welche im wesentlichen aus Hefen bestehen, nach der Filtration einer mit diesen Verunreinigungen befrachteten Flüssigkeit, beispielsweise für die Herstellung eines Getränkes wie Bier, befrachtet ist, und es sich auf der Filterauflage einer Filteranlage absetzt, wobei dieses Verfahren einen Schritt aufweist, der daraus besteht, die Filtermasse mit einer geeigneten enzymatischen Verbindung zu waschen, wobei diesem Schritt ein Waschen mit Natronlauge folgt,
dadurch gekennzeichnet, daß es die folgenden Schritte aufweist:

a) Durchführung eines Vorwaschens der zu regenerierenden Filtermasse in situ in der Filteranlage mittels Natronlauge mit einer Konzentration zwischen ungefähr 2% und ungefähr 5% bei einer Temperatur von wenigstens ungefähr 80°C während eines Zeitraumes zwischen ungefähr 60 Minuten und ungefähr 120 Minuten;
b) nachdem die Filtermasse dem Schritt a) unterzogen wurde, wird danach in situ in der Filteranlage das zuvor genannte Waschen mit einer geeigneten enzymatischen Verbindung durchgeführt, wobei dieses Waschen bei einer Temperatur zwischen ungefähr 40°C und ungefähr 60°C während eines Zeitraumes zwischen ungefähr 100 Minuten und ungefähr 200 Minuten durchgeführt wird;
c) dann, nachdem die Filtermasse dem Schritt b) unterzogen wurde, wird ein zweites Waschen mit Natronlauge durchgeführt, um die während des Schrittes b) erzeugten Abfallstoffe zu entfernen.

**2.** Regenerierungsverfahren gemäß Anspruch 1, dadurch gekennzeichnet, daß die enzymatische Verbindung insbesondere Proteinasen, Mittel, welche die Hefen lysieren können, und eventuell enzymatische Katalysemittel aufweist, und sie beispielsweise die Verbindung SP 299® von NOVO oder die Verbindung YLE® von AMANO aufweist.

**3.** Regenerierungsverfahren gemäß Anspruch 1 oder 2, dadurch gekennzeichnet, daß die enzymatische Behandlung durchgeführt wird, wenn der Druckanstieg pro Stunde zu groß und deutlich höher als mit einem unverschmutzten Filterhilfsmittel wird.

**4.** Regenerierungsverfahren gemäß Anspruch 3, dadurch gekennzeichnet, daß die enzymatische Behandlung durchgeführt wird, wenn der Druckanstieg in dem Läuterbottich ungefähr 80% des aufgrund der mechanischen Bauweise des Filters zulässigen Maximaldruckes erreicht.

**5.** Regenerierungsverfahren gemäß einem der Ansprüche 1 bis 4, dadurch gekennzeichnet, daß es zwischen den Schritten a) und b) einen Schritt aufweist, der daraus besteht, das Filterhilfsmittel auf eine Temperatur zwischen 40°C und 60°C und auf einen pH-Wert zwischen 5 und 6 zu bringen.

**6.** Regenerierungsverfahren gemäß einem der Ansprüche 1 bis 5, dadurch gekennzeichnet, daß das Filterhilfsmittel Körner mit einer durchschnittlichen Größe zwischen ungefähr 20 µm mit einer Standardabweichung von ungefähr 10 µm und ungefähr 70 µm mit einer Standardabweichung von ungefähr 25 µm aufweist.

**7.** Regenerierungsverfahren gemäß Anspruch 6, dadurch gekennzeichnet, daß das Filterhilfsmittel Körner mit einer durchschnittlichen Größe von ungefähr 35 µm mit einer Standardabweichung von ungefähr 15 µm und einem spezifischen Gewicht von ungefähr 1200 kg/m$^3$ aufweist.

**8.** Regenerierungsverfahren gemäß irgendeinem der Ansprüche 4 bis 7, dadurch gekennzeichnet, daß die synthetischen Polymerkörner Körner sind, die insbesondere ausgehend von Polyamid, Vinylpolychlorid, fluorierten Produkten, Polypropylen, Polystyrol, Polyethylen, bestimmten Kieselerdederivaten, beispielsweise Ryoliten, Glas, sowie ihren Gemischen erhalten werden.

**9.** Regenerierungsverfahren gemäß Anspruch 8, dadurch gekennzeichnet, daß die Polyamidkörner vorzugsweise aus Polycaprolactam-, Poly(hexamethylen)adipamid-, Poly(hexamethylen)nonanediamid-, Poly(hexamethylen)sebacamid-, Poly(hexamethylen)-dodecanodiamid-, Polyundecanolactam-, Polylauryllactamkörnern und/oder ihren Gemischen bestehen.

**10.** Regenerierungsverfahren gemäß einem der Ansprüche 1 bis 9, dadurch gekennzeichnet, daß es eingesetzt wird, um Filterhilfsmittelkörner zu regenerieren, welche ebenfalls praktisch runde Kugeln aufweisen oder aus praktisch runden Kugeln bestehen.

**11.** Regenerierungsverfahren gemäß einem der vorherigen Ansprüche, dadurch gekennzeichnet, daß das Filterhilfsmittel mit einem Stabilsierungsmittel für das zu filtrierende Getränk, beispielsweise PVPP, gemischt wird.

**12.** Filtrationsverfahren mit Anschwemmtechnik für eine Flüssigkeit, die mit im wesentlichen aus Hefen bestehenden, organischen Verunreinigungen befrachtet ist, beispielsweise für die Herstellung eines Getränkes wie Bier, mit Verwendung eines Filterhilfsmittels, das aus natürlichen oder synthetischen polymerischen oder natürlichen, unter der Wirkung des Filtrationsdruckes nicht verformbaren Körnern mit einem Rundungskoeffizienten zwischen ungefähr 0,6 und ungefähr 0,9 und mit einer mittleren Größe zwischen ungefähr 20 µm und ungefähr 70 µm besteht, welche dafür eingerichtet sind, einen Filterkuchen mit einer Porosität zwischen ungefähr 0,4 und ungefähr 0,8 und einem spezifischen Gewicht zwischen ungefähr 1000 kg/m$^3$ und 1500 kg/m$^3$ und vorzugsweise ungefähr gleich 1200 kg/m$^3$ zu bilden, wobei dieses Filterhilfsmittel in die mit den Verunreinigungen befrachtete, zu filtrierende Flüssigkeit gemischt wird und es sich auf der Filterauflage einer Filteranlage absetzt, wobei es sich im Verlauf eines Filtrationsvorganges der Flüssigkeit mit den Verunreinigungen befrachtet, dadurch gekennzeichnet, daß es nach einem oder mehreren Filtrationsvorgängen einen Schritt zur Regenerierung in situ unter Einsatz des Verfahrens gemäß einem der Ansprüche 1 bis 11 aufweist.